Europäisches Patentamt

European Patent Office

Office européen des brevets

(11) Publication number: **0 394 529 B1**

# EUROPEAN PATENT SPECIFICATION

(45) Date of publication of patent specification: **06.10.93** (51) Int. Cl.5: **A01N 43/64**, A01N 59/00

(21) Application number: **89107638.2**

(22) Date of filing: **27.04.89**

(54) Chloroisocyanurate composition.

(43) Date of publication of application:
**31.10.90 Bulletin 90/44**

(45) Publication of the grant of the patent:
**06.10.93 Bulletin 93/40**

(84) Designated Contracting States:
**DE ES FR GB IT**

(56) References cited:
**EP-A- 0 105 952**
**FR-A- 2 178 220**

**CHEMICAL PATENTS INDEX, BASIC AB-STRACTS JOURNAL, week D51, 17th February 1982, Section C, abstract no. 93758, Derwent Publications Ltd, London, GB; & JP-A-56 142 210**

**CHEMICAL PATENTS INDEX, BASIC AB-STRACTS JOURNAL, week 8504, 20th March 1985, Section C, abstract no. 22827, Derwent Publications Ltd, London, GB; & JP-A-59 219 205**

(73) Proprietor: **NISSAN CHEMICAL INDUSTRIES LTD.**
**3-7-1, Kanda Nishiki-cho**
**Chiyoda-ku Tokyo(JP)**

(72) Inventor: **Ota, Masanori c/oNissan Chemical Industries, Ltd.**
**Central Research Institute, 722-1 Tsuboi-cho**
**Funabashi-shi Chiba-ken(JP)**
Inventor: **Nakamura, Masashi c/oNissan Chemical Industries,**
**Ltd.,Central Research Institute, 722-1 Tsuboi-cho**
**Funabashi-shi Chiba-ken(JP)**
Inventor: **Mizusawa, Kenichi c/oNissan Chemical Industries,**
**Ltd.,Central Research Institute, 722-1 Tsuboi-cho**
**Funabashi-shi Chiba-ken(JP)**

(74) Representative: **Hansen, Bernd, Dr.rer.nat. et al**
**Hoffmann, Eitle & Partner,**
**Patentanwälte,**
**Postfach 81 04 20**
**D-81904 München (DE)**

CHEMICAL PATENTS INDEX, BASIC AB-
STRACTS JOURNAL, week 8821, 20th July
1988, Section A, abstract no. 145113, Der-
went Publications Ltd, London, GB; & JP-
A-63 088 108

## Description

The present invention relates to a chloroisocyanurate composition for disinfection and sterilization, more particularly, to a composition comprising a dichloroisocyanurate, which may be used to prevent an increase in hydrogen ion concentration and which has excellent stability during storage.

Dichloroisocyanurates have been widely used due to the fact that since active chlorine (residual chlorine) supplied in water is stable as compared to a sodium hypochlorite solution or highly bleaching powders (main ingredient: calcium hypochlorite) and thus only a small amount is required, they are free from calcium hydroxide or calcium carbonate as in highly bleaching powders, and they are completely soluble and have a potent bactericidal activity. For example, dichloroisocyanurates have been used in large quantities as bactericidal disinfectants or slime controlling agents for sewage, pool water, cooling water, etc. in the form of powdery, granular, tablet, etc. preparations.

However, in the case that dichloroisocyanurates are supplied continuously or intermittently over long periods of time for sterilization, disinfection or slime control of water which is in a closed system, for example, cooling water, pool water, etc., dichloroisocyanurates accumulate in reservoir water frequently causing an increase in hydrogen ion concentration in the water. This tendency is particularly significant in water having low alkalinity, such as rain water. Furthermore, in water such as cooling water which is recycled over long periods of time and relatively easily polluted, the amount of dichloroisocyanurates to be supplied is increased so that the hydrogen ion concentration in the water also increases. When the hydrogen ion concentration increases, corrosion of equipment, etc. occurs.

For these reasons, a method of periodically sprinkling sodium carbonate has been adopted to prevent such an increase in hydrogen ion concentration in water in a closed system. However, supplying sodium carbonate while measuring pH and controlling the amount of sodium carbonate is complicated.

Extensive studies have not been made as to how to prevent an increase of the hydrogen ion concentration due to continuous use of dichloroisocyanurates in a closed water system as described above. A method has been proposed in Japanese Patent Laid-open Publication No. Sho 59-67208 (67208/1984) in which isocyanuric acid and magnesium oxide or magensium hydroxide are formulated in trichloroisocyanuric acid. However, when using this method in a closed water system over long periods of time, the pH of the water may gradually decrease. Furthermore, there has been proposed a trichloroisocyanuric acid composition having formulated therein an alkaline substance. However, this composition is unstable when in a moistened state (wet state), such that it generates nitrogen chloride gas having explosive properties. That is, care must be taken when handling the composition and during storage of the composition, wetting should be strictly prohibited.

FR-A-2 178 220 discloses a composition which stabilizes dichlorocyanuric acid salts against decomposition. The composition includes inter alia 35-65% by weight of an alkali metal dichlorocyanurate and 5-15% by weight of an inorganic salt having a pH of at least 9 in an aqueous media. Examples of the inorganic salts mentioned include sodium or potassium carbonate, sodium or potassium tripolyphosphate and sodium or potassium silicate.

## SUMMARY OF THE INVENTION

In order to prevent the increase of hydrogen ion concentration caused by continuous use of dichloroisocyanurate compounds in a closed water system and to obtain a composition having good stability during storage, the present inventors have made extensive studies on sensitive physical properties of the dichloroisocyanurates described and the mechanism for forming nitrogen chloride. As a result, it has been surprisingly found that by providing a specific alkaline substance in a specific ratio, the dichloroisocyanurates can be extremely stably formulated.

That is, in one aspect the present invention provides a chloroisocyanurate composition comprising (1) 10 to 60 parts by weight of magnesium oxide and/or magnesium hydroxide, and (2) 100 parts by weight of at least one compound selected from sodium dichloroisocyanurate anhydride, sodium dichloroisocyanurate dihydrate and potassium dichloroisocyanurate.

According to a further aspect, the present invention provides a method for disinfecting and sterilizing water in a closed system which comprises the step of adding to said water a chloroisocyanurate composition comprising (1) 10 to 60 parts by weight of magnesium oxide and/or magnesium hydroxide, and (2) 100 parts by weight of at least one compound selected from sodium dichloroisocyanurate anhydride, sodium dichloroisocyanurate dihydrate and potassium dichloroisocyanurate.

DETAILED DESCRIPTION OF THE PREFERRED EMBODIMENTS

The alkaline substance of magnesium oxide and/or magnesium hydroxide is preferably provided in an amount of 15 to 50 parts by weight, based on 100 parts by weight of the dichloroisocyanurate. When the amount of the alkaline substance is less than 10 parts by weight, there is a tendency for its hydrogen ion concentration to increase and for its pH value to decrease, when used in a closed water system over long periods of time. On the other hand, when the amount exceeds 60 parts by weight, the stability of the composition when in a wet state decreases and noxious nitrogen chloride gas tends to be generated. Furthermore, when using other alkaline substances such as calcium oxide, sodium orthoborate, sodium metasilicate, sodium hydroxide, etc., the stability of the dichloroisocyanurate composition is poor when in a wet state and such alkaline substances cannot be used.

The process for producing the dichloroisocyanurate composition according to the present invention is not particularly limited, for example, dry mixing with a V-shaped mixer, a ribbon mixer, etc. which are conventionally used may be applied.

The composition of the present invention can be used in optional forms such as powders, granules, pills, tablets, etc. Taking handling into account, granules or tablets are preferred. When granulating, better results can be obtained by using components for formulation having a particle size of 500 $\mu$ (micron) or less. When the particle size exceeds 500 $\mu$, molding tends to be non-uniform and stability of the molding when in a wet state is reduced.

For forming granules, there are (1) a conventional method for dry granulation which comprises press molding into a sheet using a 2-roll mill, crushing into granules and classifying, and (2) a method for wet granulation which comprises granulating a wet-cake into cylindrical particles with an extending granulator or further applying the granules to a rolling granulator or a spherical particle dresser into spherical granules. In a method for preparing tablets, it is preferred that the granules obtained by the methods described above be tableted.

Upon granulation, if necessary, an expedient such as a binder, fluidizing agent, lubricant, etc. and an auxiliary agent such as a disintegrating agent, etc. may be incorporated. Furthermore, a filler may also be incorporated to appropriately control the concentration.

The chloroisocyanurate composition obtained in the present invention can be stored over long period of time, can minimize the generation of nitrogen chloride when in a wet state and provides increased safety. Even when the dichloroisocyanurate composition is used over long periods of time in a closed water system such as indoor heated swimming pool, etc., hydrogen ion concentration does not increase, i.e., there is no reduction in pH.

As described above, the composition according to the present invention can prevent an increase in the hydrogen ion concentration even in the case of continuously supplying the chloroisocyanurate into a reservoir tank in a closed system over long periods of time. Moreover, the composition can be stored stably.

Hereafter the present invention is described in detail by referring to the examples and comparative examples.

EXAMPLES

Example 1

To 1 kg of anhydride of sodium dichloroisocyanurate having a particle size of 50 to 350 $\mu$ and a moisture content of 0.14 % was added 180 g of magnesium oxide having a particle size of 100 $\mu$ or less and a moisture content of 0.11 %. The mixture was granulated with a compacting machine. After crushing, classification was performed to give granules having particle size of 10 mesh screen pass and 32 mesh screen stop.

Tableting was effected by a method in which the granules granulated with the compacting machine were charged into a mold having a 25 mm diameter cavity followed by continuous tableting with a rotary tableting machine under a compression pressure of about 400 kg/cm$^2$. Thus, a cylindrical tablet having a diameter of 25 mm, a thickness of 13 mm and a weight of 10 g was prepared.

The granules were used for evaluating the hydrogen ion concentration and a tablet weighing 10 g was used to evaluate stability in a wet state.

4

(A) Evaluation of hydrogen ion concentration

In a beaker was charged 1 liter of water having Methyl Orange alkalinity of 5 mg/l (adjusted by mixing tap water with distilled water) calculated as $CaCO_3$. Granules of the chloroisocyanurate composition were put into the beaker in an amount sufficient to produce residual chlorine concentration of 60 mg/l in the water, and the granules were stirred and dissolved. A low temperature type ultraviolet ray lamp (wavelength of 250 to 3000 Å) of 10 W was immersed in the water in the beaker. When ultraviolet rays were irradiated to the water over about 6 hours, the residual chlorine completely disappeared over about 6 hours; pH at this time was measured.

The residual chlorine concentration of 2 mg/l corresponds to a mean daily amount used in an actual pool and 60 mg/l corresponds to an amount used for 30 days. That is, the measurement in the residual chlorine concentration of 60 mg/l is used to simulate measurement of pH in pool water after 30 days.

(B) Evaluation of stability

In an Erlenmeyer's flask having an inner volume of 300 ml was charged 10 g of the chloroisocyanurate tablet. Then, 10 ml of water was poured onto the surface of the tablet and the flask was stoppered. After the flask was allowed to settle for 15 minutes at 35 °C, the stopper was opened. The gas generated by decomposition was examined by an organoleptic test. The results are shown in Tables 1 and 2.

Examples 2 through 6 Reference Examples 1 through 3 and Comparative Examples 1 through 14

Granules or tablets were prepared by formulating compositions shown in Tables 1 and 2 in a manner similar to Example 1. Evaluation was made in a manner similar to Example 1. Particle sizes of the raw materials for the formulated compositions were the same as those in Example 1 except in Comparative Example 10, in which the particle size of sodium dichloroisocyanurate anhydride was from 750 to 1500 μ.

The results are shown in Tables 1 and 2. As shown in Tables 1 and 2, the chloroisocyanurate compositions of the present invention show substantially no change in pH and exhibit excellent stability in a wet state.

In the tables, "EX." means Example; "Ref. Ex." means Reference Example; and "Comp. Ex." means Comparative Example.

Table 1

| | Formulation Composition (per 100 parts by weight of Chloroisocyanurate) | | | | Results of Evaluation | |
|---|---|---|---|---|---|---|
| | Chloroiso-cyanurate | Alkaline compound | Disinte-grating agent | Lubri-cant | Change in pH | Wet stabi-lity |
| Ex.1 | DCCNa*[1] | Magnesium oxide 18 | - | - | 6.87 → 6.74 | ◎ |
| Ex.2 | " | " 25 | - | - | - | ◎ |
| Ex.3 | " | " 25 | - | 0.2*[5] | - | ◎ |
| Ex.4 | " | Magnesium hydroxide 25 | - | - | - | ◎ |
| Comp Ex.11 | " | Sodium carbonate 44 | 3.0*[4] | - | 6.84 → 6.91 | ○ |
| Comp Ex.12 | " | " 44 | " | 0.2*[5] | - | ○ |
| Ex.5 | DCCNa 2H$_2$O*[2] | Magnesium hydroxide 25 | " | " | 6.91 → 6.87 | ◎ |
| Comp Ex.13 | " | Sodium carbonate 44 | " | " | - | ○ |
| Comp Ex.14 | DCCK*[3] | Calcium hydroxide 25 | - | - | 6.80 → 6.84 | ○ |
| Ex.6 | " | Magnesium oxide 18 | - | - | - | ◎ |
| Ref. Ex.1 | DCCNa | - | - | - | 6.78 → 5.11 | ◎ |
| Ref. Ex.2 | DCCNa.2H$_2$O | - | - | - | 6.82 → 5.07 | ◎ |
| Ref. Ex.3 | DCCK | - | - | - | 6.96 → 4.92 | ◎ |

*1    DCCNa:          sodium dichloroisocyanurate anhydride
*2    DCCNa.2H$_2$O:  dichloroisocyanurate dihydrate
*3    DCCK:           potassium dichloroisocyanurate
*4    disintegrating agent:  carboxymethyl cellulose Ca
*5    lubricant:  sodium stearate

Table 2

| Formulation Composition (per 100 parts by weight of Chloroisocyanurate) | | | | Results of Evaluation | |
|---|---|---|---|---|---|
| Chloroiso-cyanurate | Alkaline compound | Disinte-grating agent | Lubri-cant | Change in pH | Wet stabi-lity |
| Comp. Ex.1 DCCNa | Calcium oxide 25 | - | - | - | ✕ |
| Comp. Ex.2 DCCNa.2H$_2$O | Sodium orthophos- phate 40 | - | - | - | △ |
| Comp. Ex.3 DCCK | Sodium meta-sili- cate 40 | - | - | - | △ |
| Comp. Ex.4 DCCNa | Sodium hydroxide 70 | - | - | - | ✕ |
| Comp. Ex.5 " | Magnesium oxide 70 | - | - | - | △ |
| Comp. Ex.6 " | Magnesium hydroxide 70 | - | - | - | △ |
| Comp. Ex.7 " | Sodium carbonate 70 | - | - | - | △ |
| Comp. Ex.8 " | Magnesium oxide 9 | - | - | 6.84 → 6.05 | ◎ |
| Comp. Ex.9 " | Sodium carbonate 9 | - | - | 6.88 → 5.70 | ◎ |
| Comp. Ex.10 " | Sodium carbonate 25 | - | - | - | △ |

⊙ : After the opening of the stopper, irritant odor is

remarkably weak or there is little odor.

○ : After the opening of the stopper, there is weak

irritant odor.

△ : After the opening of the stopper, there is remarkable

irritant odor though the inside of the flask is not

turned yellow.

X : During storage, decomposition gas remarkably genenales

and the inside of the flask is turned yellow.

## Claims

1. A chloroisocyanurate composition for disinfection and sterilization comprising (1) 10 to 60 parts by weight of magnesium oxide and/or magnesium hydroxide, and (2) 100 parts by weight of at least one compound selected from sodium dichloroisocyanurate anhydride, sodium dichloroisocyanurate dihydrate and potassium dichloroisocyanurate.

2. A chloroisocyanurate composition according to claim 1, wherein said chloroisocyanurate composition comprises at least one granule formed from powdery raw formulation materials having an average particle size of not greater than 500 $\mu$.

3. A chloroisocyanurate composition according to claim 1, wherein said chloroisocyanurate composition comprises at least one tablet formed from powdery raw formulation materials having an average particle size of not greater than 500 $\mu$.

4. A method for disinfecting and sterilizing water in a closed system which comprises the step of adding to said water a chloroisocyanurate composition comprising (1) 10 to 60 parts by weight of magnesium oxide and/or magnesium hydroxide, and (2) 100 parts by weight of at least one compound selected from sodium dichloroisocyanurate anhydride, sodium dichloroisocyanurate dihydrate and potassium dichloroisocyanurate.

## Patentansprüche

1. Chlorisocyanurat-Zusammensetzung zur Desinfektion und Sterilisation, umfassend (1) 10 bis 60 Gew.-Teile Magnesiumoxid und/oder Magnesiumhydroxid und (2) 100 Gew.-Teile mindestens einer Verbindung, ausgewählt aus Natriumdichlorisocyanuratanhydrid, Natriumdichlorisocyanuratdihydrat und Kaliumdichlorisocyanurat.

2. Chlorisocyanurat-Zusammensetzung gemäss Anspruch 1, dadurch **gekennzeichnet,** dass die Chlorisocyanurat-Zusammensetzung mindestens eine Granalie umfasst, die aus pulverigen Rohformulierungsstoffen gebildet wird, die eine durchschnittliche Partikelgrösse von nicht mehr als 500 $\mu$m haben.

3.  Chlorisocyanurat-Zusammensetzung gemäss Anspruch 1, dadurch **gekennzeichnet,** dass die Chlorisocyanurat-Zusammensetzung mindestens eine Tablette umfasst, die aus pulverigen Rohformulierungsstoffen gebildet wird, die eine durchschnittliche Partikelgrösse von nicht mehr als 500 $\mu$m haben.

4.  Verfahren zur Desinfektion und Sterilisation von Wasser in einem geschlossenen System, umfassend den Schritt der Zugabe einer Chlorisocyanurat-Zusammensetzung, umfassend (1) 10 bis 60 Gew.-Teile Magnesiumoxid und/oder Magnesiumhydroxid und (2) 100 Gew.-Teile mindestens einer Verbindung, ausgewählt aus Natriumdichlorisocyanuratanhydrid, Natriumdichlorisocyanuratdihydrat und Kaliumdichlorisocyanurat, zu diesem Wasser.

**Revendications**

1.  Composition de chloroisocyanurate pour la désinfection et la stérilisation comprenant (1) 10 à 60 parties en masse d'oxyde de magnésium et/ou d'hydroxyde de magnésium, et (2) 100 parties en masse d'au moins un composé choisi parmi l'anhydride du dichloroisocyanurate de sodium, le dihydrate du dichloroisocyanurate de sodium et le dichloroisocyanurate de potassium.

2.  Composition de chloroisocyanurate selon la revendication 1, dans laquelle ladite composition de chloroisocyanurate comprend au moins un granulé formé à partir de matières de formulation brutes pulvérulentes ayant une taille de particules moyenne ne dépassant pas 500 $\mu$.

3.  Composition de chloroisocyanurate selon la revendication 1, dans laquelle ladite composition de chloroisocyanurate comprend au moins un comprimé formé à partir de matières de formulation brutes pulvérulentes ayant une taille de particules moyenne ne dépassant pas 500 $\mu$.

4.  Méthode pour désinfecter et stériliser de l'eau dans un système fermé, qui comprend l'étape selon laquelle on ajoute à ladite eau une composition de chloroisocyanurate comprenant (1) 10 à 60 parties en masse d'oxyde de magnésium et/ou d'hydroxyde de magnésium, et (2) 100 parties en masse d'au moins un composé choisi parmi l'anhydride du dichloroisocyanurate de sodium, le dihydrate du dichloroisocyanurate de sodium et le dichloroisocyanurate de potassium.